# EUROPEAN PATENT APPLICATION

(11) **EP 4 715 981 A1**
(43) Date of publication of application: **25.03.2026**
(21) Application number: 25193320.6
(22) Date of filing: 01.08.2025
(51) Int. Cl.: H01M 50/207, H01M 50/233, H01M 50/271, H01M 50/287, H01M 50/289, B60L 50/64

(54) **BATTERY HOUSING AND BATTERY PACK**

(30) Priority: 20.09.2024 CN 202422310991 U; 03.12.2024 WO PCT/CN2024/136337
(71) Applicant: Eve Energy Co., Ltd., Huizhou, Guangdong 516006 (CN)
(72) Inventor: WEN, Shengde, Huizhou, Guangdong, 516006 (CN)
(74) Representative: Berggren Oy

(57) **Abstract**

A battery housing (100) and a battery pack are disclosed. The battery housing (100) includes a main body (10), a cover (20), and a shell cover assembly (30). The main body (10) defines a battery compartment receiving battery units (300) of the battery pack. The cover (20) is connected to the main body (10) and seals the battery compartment. The shell cover assembly (30) is connected to a side of the cover (20) opposite the battery compartment and forms an electrical compartment (301) receiving electrical units (200) of the battery pack. The cover (20) includes an opening (201) corresponding to the electrical compartment (301), the opening (201) communicates the battery compartment and the electrical compartment (301). The battery units (300) are arranged along the length and width directions of the battery housing (100), while the electrical units (200) and the battery units (300) are arranged along the thickness direction of the battery housing (100).

## Description

### TECHNICAL FIELD

The present application relates to a field of battery technology, and more particularly, to a battery housing and a battery pack.

### DESCRIPTION OF RELATED ART

As fossil energy continues to be depleted, renewable energy is gradually being promoted and adopted. Among renewable energy technologies, storage batteries serve as a key medium and are widely used in applications such as electric vehicles. With the increasing popularity of electric vehicles, range anxiety is being raised more frequently. Therefore, how to improve the energy density of battery packs to extend the driving range of electric vehicles has become an urgent technical issue to be addressed.

In related technologies, conventional box designs separate the crossbeam and the mounting point. The force transmission path is usually: vehicle frame, mounting point, battery pack box frame, module crossbeam, and battery cell module.

### SUMMARY OF INVENTION

The force transmission path in this design is excessively long, which can lead to structural failures and reduced rigidity in the battery pack under vibration-related conditions, such as cracks in the box welds or the box body itself, and a lower overall modal response that may resonate with the vehicle. Moreover, the conventional design positions mounting points around the perimeter of the box, typically requiring extensions in the form of ears or brackets outside the box for vehicle attachment. This not only unnecessarily consumes battery installation space but also diminishes space utilization efficiency.

The present application provides a battery pack, including a box and a crossbeam; the box is provided with a connected receiving space and mounting holes; the crossbeam is fixedly connected to the box and installed in the receiving space, and a portion of the crossbeam is disposed in the mounting holes and configured to connect with the vehicle frame to mount the battery pack on the vehicle frame.

The present application also provides a vehicle, including a vehicle frame and the battery pack described above, where the crossbeam is connected to the vehicle frame to mount the battery pack on the vehicle frame.

### BENEFICIAL EFFECTS

One side of the cover is connected to the main body to form the battery compartment, and the opposite side of the cover is connected to the shell cover assembly to form the electrical compartment. The battery compartment is configured to accommodate battery units which are arranged along the length and width directions of the battery housing. The electrical compartment is configured to accommodate electrical units. The electrical units and the battery units are arranged along the thickness direction of the battery housing. In this configuration, the electrical units do not occupy the installation space for the battery units. As a result, more battery units can be installed within the same volume, thereby increasing the energy density of the battery pack.

### BRIEF DESCRIPTION OF DRAWINGS

To better illustrate the technical solutions in the embodiments of the present disclosure or in conventional techniques, the drawings used in the description of the embodiments or the conventional techniques are briefly introduced below. It should be understood that the drawings described below only represent some embodiments of the present disclosure. Those skilled in the art may derive other drawings based on the structures shown, without involving any inventive effort.
FIG. 1 is a schematic view of the assembled structure of a battery pack according to one embodiment of the present disclosure.
FIG. 2 is an exploded schematic view of the battery pack according to one embodiment of the present disclosure.
FIG. 3 is a cross-sectional schematic view of the battery pack according to one embodiment of the present disclosure.
FIG. 4 is a schematic structural view of a cover according to one embodiment of the present disclosure.
FIG. 5 is a schematic view showing the internal structure of the battery pack according to one embodiment of the present disclosure.

### Description of Reference Numerals:

300: battery unit, 200: electrical unit, 100: battery housing, 10: main body, 101: battery compartment, 20: cover, 201: opening, 21: raised platform, 30: shell cover assembly, 301: electrical compartment, 31: frame, 312: assembly port, 32: top cover, 321: window, 33: panel, 332: socket, 34: connector, 35: first sealing ring, 36: second sealing ring, 37: third sealing ring, 40: load-bearing beam, 50: reinforcing beam.

### DETAILED DESCRIPTION OF EMBODIMENTS

The following description, in conjunction with the accompanying drawings, provides a clear and complete explanation of the technical solutions described in the embodiments of the present disclosure. It should be understood that the described embodiments represent only a portion of the embodiments of the present disclosure and not all possible embodiments. Any other embodiments that may be derived by those of ordinary skill in the art without inventive effort shall also fall within the scope of protection of the present disclosure.

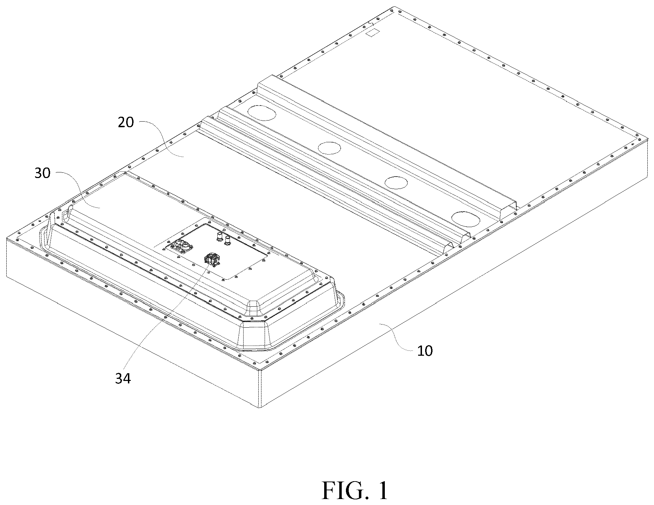

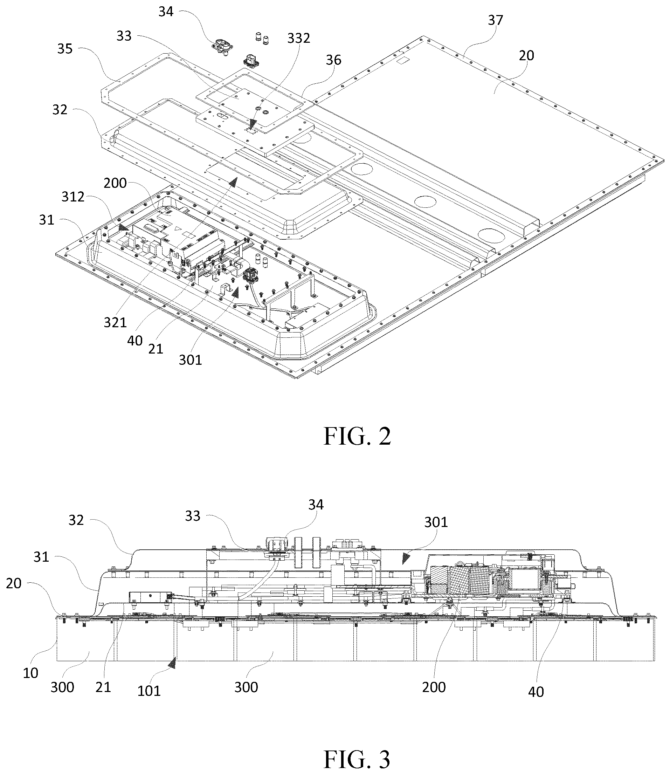

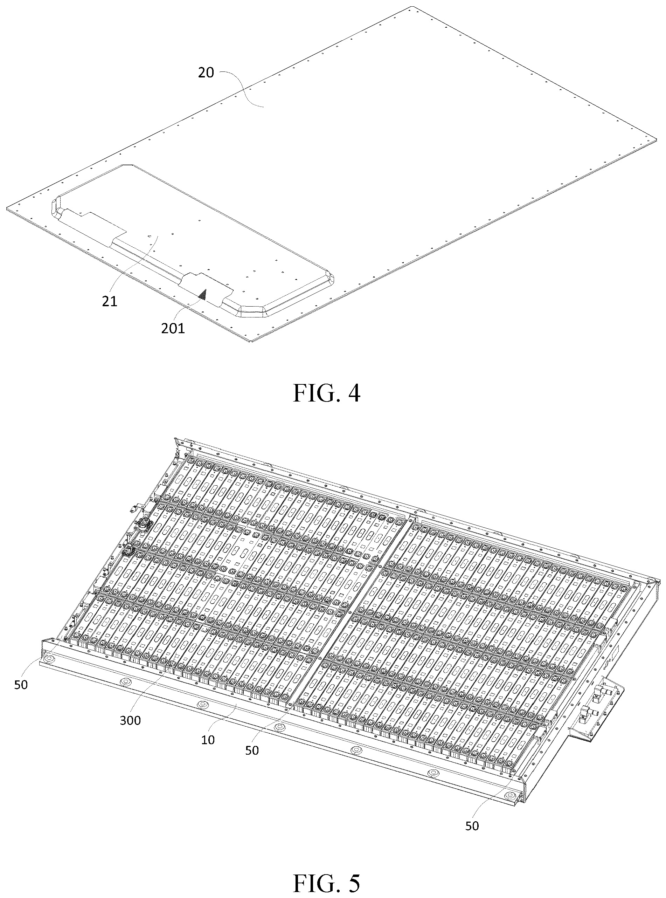

Referring to FIGs. 1 through 4, FIG. 1 is a schematic view showing the assembled structure of a battery pack according to one embodiment of the present disclosure. FIG. 2 is an exploded schematic view of the battery pack according to one embodiment of the present disclosure. FIG. 3 is a cross-sectional schematic view of the battery pack according to one embodiment of the present disclosure. FIG. 4 is a schematic view of the structure of the cover 20 according to one embodiment of the present disclosure.

The present disclosure provides a battery pack including battery units 300, electrical units 200, and a battery housing 100. The battery housing 100 includes a battery compartment 101 and an electrical compartment 301. The battery housing 100 defines three mutually perpendicular directions: a thickness direction Z, a length direction X, and a width direction Y. The length and width directions correspond to the planar extension of the battery housing 100, and the thickness direction corresponds to the direction in which the battery housing 100 increases in thickness. It can be understood that, in the present embodiment, the dimensions of the battery housing 100 decrease sequentially in the length, width, and thickness directions. The battery compartment 101 and the electrical compartment 301 are spaced apart along the thickness direction. The battery units 300 are assembled in the battery compartment 101 of the battery housing 100 and function as energy storage units of the battery pack. Each battery unit 300 may include a plurality of individual cells. The electrical units 200 are assembled in the electrical compartment 301 and function as auxiliary management units for managing the battery units 300. The battery units 300 and the electrical units 200 are electrically connected through an opening 201.

The electrical units 200 may include a battery management system (BMS) and a battery disconnect unit (BDU), among others. The BMS is configured to intelligently manage and maintain the battery units 300 by monitoring battery status, preventing overcharging and over discharging, and thereby extending the service life of the batteries. The BDU is configured to receive electrical energy from a charging system and control the speed and torque of a motor via a controller to drive a vehicle. Additionally, the BDU is configured to monitor the status of the batteries in real time to ensure safe operation.

Specifically, the battery housing 100 includes a main body 10, a cover 20, and a shell cover assembly 30. The main body 10 defines a battery compartment 101 configured to accommodate the battery units 300 which are connected to the main body 10. The battery compartment 101 may have a rectangular, circular, or irregular shape. The cover 20 is connected to the main body 10 and seals the battery compartment 101. The shell cover assembly 30 is connected to a side of the cover 20 opposite the battery compartment 101 and defines an electrical compartment 301. The battery compartment 101 and the electrical compartment 301 are located on opposite sides of the cover 20. The electrical compartment 301 is configured to accommodate the electrical units 200 of the battery pack. The cover 20 defines an opening 201 in a region corresponding to the electrical compartment 301, the opening 201 being configured to communicate the battery compartment 101 and the electrical compartment 301. Electrical wires pass through the opening 201 to electrically connect the battery units 300 and the electrical units 200, and conduits pass through the opening 201 to connect the battery units 300 and the electrical units 200.

In this embodiment, one side of the cover 20 is connected to the main body 10 to form the battery compartment 101, and the opposite side of the cover 20 is connected to the shell cover assembly 30 to form the electrical compartment 301. The battery compartment 101 is configured to accommodate battery units 300 that are arranged along the length and width directions of the battery housing 100. The electrical compartment 301 is configured to accommodate electrical units 200. The electrical units 200 and the battery units 300 are vertically arranged with respect to each other along the thickness direction of the battery housing 100. In this configuration, the electrical units 200 do not occupy the installation space for the battery units 300. As a result, more battery units 300 can be installed within the same volume, thereby increasing the energy density of the battery pack.

In some embodiments, the cover 20 protrudes toward the electrical compartment 301 to form a raised platform 21 configured to support the electrical units 200. The raised platform 21 is located in a region of the cover 20 corresponding to the electrical compartment 301 and is higher than other regions of the cover 20, such that its top surface is positioned farther from the battery units 300. When the electrical units 200 are mounted on the top surface of the raised platform 21, the electrical units 200 are farther from the battery units 300 compared to being mounted on other regions of the cover 20. The raised platform 21 thereby forms a buffer space, which prevents deformation of the cover 20 under the weight of the electrical units 200, thereby protecting the battery units 300 from damage. Additionally, the raised platform 21 is a protruding region of the cover 20, functioning as a reinforcing rib to locally enhance the structural strength of the cover 20 and to further prevent deformation of the cover 20 caused by the weight of the electrical units 200. Furthermore, the buffer space formed between the top surface of the raised platform 21 and the battery units 300 provides sufficient clearance when securing the electrical units 200 with screws, thereby preventing the screws from damaging the battery units 300.

The raised platform 21 may be formed without altering the thickness of the cover 20, for example, by stamping, resulting in a hollow cavity within the raised platform 21. Alternatively, the raised platform 21 may be formed by altering the local thickness of the cover 20, for example, by welding or die-casting, resulting in a solid structure.

In some embodiments, a plurality of parallel, spaced-apart elongated grooves are formed on the raised platform 21. The elongated grooves may extend along the length direction of the raised platform 21 and be spaced apart along the width direction, or extend along the width direction and be spaced apart along the length direction. The cross-sectional shape of the elongated grooves may be V-shaped, U-shaped, or arc-shaped. The elongated grooves form channels on the raised platform 21, allowing air to directly contact the electrical units 200 mounted on the raised platform 21 and carry heat away along the elongated grooves. Additionally, the elongated grooves function as reinforcing ribs, thereby further enhancing the structural strength of the raised platform 21.

In some embodiments, a plurality of spaced-apart spherical recesses are formed on the raised platform 21 by local depressions. The spherical recesses may be arranged in a rectangular pattern, a circular pattern, or other regular or irregular patterns. The cross-sectional shape of the spherical recesses may be V-shaped, U-shaped, or arc-shaped. The spherical recesses function as reinforcing ribs, thereby further enhancing the structural strength of the raised platform 21.

In some embodiments, the battery housing 100 further includes a plurality of load-bearing beams 40 disposed on the raised platform 21 and connected to the shell cover assembly 30. The load-bearing beams 40 may be arranged in a parallel pattern, an intersecting pattern, or a combination of parallel and intersecting patterns to form a net-like structure. The load-bearing beams 40 span the raised platform 21 and are connected to the shell cover assembly 30, thereby distributing the load they bear to the shell cover assembly 30. For example, heavier components, such as a battery drive unit, may be mounted on the load-bearing beams 40. The load-bearing beams 40 transfer a portion of the weight of such components to the shell cover assembly 30, allowing the raised platform 21 and the shell cover assembly 30 to jointly support the weight. This configuration reduces the pressure exerted on the raised platform 21 and prevents its deformation. The load-bearing beams 40 may be formed by sheet metal bending or by injection molding of plastic materials.

Specifically, the shell cover assembly 30 includes a frame 31 and a top cover 32. The frame 31 is connected to the cover 20, and an assembly port 312 is formed at an end of the frame 31 opposite the cover 20. The top cover 32 is connected to the frame 31 and seals the assembly port 312. The connection between the frame 31 and the cover 20 may be achieved through welding, bonding, or other methods that do not require driving sharp objects into the battery compartment 101. After the frame 31 is secured to the cover 20, the frame 31 partially defines the electrical compartment 301 on the cover 20 and serves as a barrier to prevent the electrical units 200 from deviating from their intended position during installation through the assembly port 312. Once the electrical units 200 are installed, the top cover 32 is mounted onto the frame 31 to seal the assembly port 312, thereby completing the electrical compartment 301.

Additionally, dividing the shell cover assembly 30 into the frame 31 and the top cover 32 facilitates the use of different materials and manufacturing processes based on functional requirements. For example, the frame 31 requires high strength to serve as a barrier and may be made of materials such as iron, aluminum, or alloys. The top cover 32 primarily serves as a shield and has lower strength requirements, and thus may be made of plastic materials such as polycarbonate (PC), polymethyl methacrylate (PMMA), polyamide (PA), or polystyrene (PS). The top cover 32 may even be made of a transparent material to facilitate inspection of the operation of the electrical compartment 301.

Furthermore, the shell cover assembly 30 includes a panel 33 and a connector 34. The panel 33 defines a socket 332, and the connector 34 is assembled in the socket 332. The top cover 32 defines a window 321 that communicates with the electrical compartment 301, and the panel 33 is connected to the top cover 32 to seal the window 321. The top cover 32 is disposed on the side of the frame 31 opposite the cover 20. The panel 33 is connected to the top cover 32 and is also positioned on the side of the frame 31 opposite the cover 20, such that the socket 332 on the panel 33 faces along the thickness direction of the battery housing 100. As a result, plugs can be aligned along the thickness direction, thereby facilitating mating with the external connectors 34. Additionally, the connectors 34 are centralized on the panel 33, simplifying management and maintenance. The connectors 34 may include water pipe connectors, electrical connectors, or other types.

The shell cover assembly 30 further includes a first sealing ring 35. The frame 31 and the cover 20 are connected by welding to form a sealed connection, with the welding process ensuring that any gaps are filled to maintain sealing integrity. The top cover 32 is sealingly connected to the frame 31 by the first sealing ring 35. The first sealing ring 35 may be disposed between the top cover 32 and the frame 31, with the top cover 32 pressing the first sealing ring 35 against the frame 31 and secured to the frame 31 using rivets or screws. Alternatively, the first sealing ring 35 may be disposed on the side of the top cover 32 opposite the frame 31, placed on the top cover 32, and secured to the frame 31 using rivets or screws. The first sealing ring 35 may be made of silicone or foam material.

The shell cover assembly 30 further includes a second sealing ring 36 and a third sealing ring 37. The panel 33 and the top cover 32 are sealingly connected by the second sealing ring 36, and the cover 20 and the main body 10 are sealingly connected by the third sealing ring 37. The second sealing ring 36 may be disposed between the panel 33 and the top cover 32, with the panel 33 pressing the second sealing ring 36 against the top cover 32 and secured to the top cover 32 using rivets or screws. Alternatively, the second sealing ring 36 may be disposed on the side of the panel 33 opposite the top cover 32, placed on the panel 33, and secured to the top cover 32 using rivets or screws. Similarly, the third sealing ring 37 may be disposed between the cover 20 and the main body 10, with the cover 20 pressing the third sealing ring 37 against the main body 10 and secured to the main body 10 using rivets or screws. Alternatively, the third sealing ring 37 may be disposed on the side of the cover 20 opposite the main body 10, placed on the cover 20, and secured to the main body 10 using rivets or screws. The second sealing ring 36 may be made of silicone or foam material. The third sealing ring 37 may be made of silicone or foam material.

Referring to FIGs. 3 and 5, FIG. 5 is a schematic view illustrating the internal structure of the battery pack according to one embodiment of the present disclosure.

The battery housing 100 further includes a plurality of reinforcing beams 50 connected to the main body 10. The reinforcing beams 50 are spaced apart and arranged in parallel along the length direction of the main body 10, with adjacent reinforcing beams 50 defining spaces configured to accommodate battery units 300. The reinforcing beams 50 extend between and connect opposite sides of the main body 10, thereby enhancing the overall structural strength of the main body 10 and preventing deformation. The plurality of reinforcing beams 50 divides the battery compartment 101 into a two-pane window shaped configuration. Compared to a four-pane window shaped configuration, this embodiment omits longitudinal beams that would otherwise extend perpendicular to the reinforcing beams 50, thereby saving space for installing additional battery units 300 and increasing the energy density of the battery pack. Additionally, by omitting the longitudinal beams, the space within the battery compartment 101 is further optimized, facilitating the arrangement of the battery units 300.

It should be noted that directional terms (e.g., up, down, left, right, front, back) used in the embodiments of the present disclosure are intended to describe relative positional relationships or movements between components in a specific orientation. If the specific orientation changes, the directional indications shall also be correspondingly adjusted.

Additionally, when an element is described as being "fixed to" or "disposed on" another element, it may be directly fixed to or disposed on the other element, or there may be an intervening element therebetween. Likewise, when an element is described as being "connected to" another element, it may be directly connected or indirectly connected through an intervening element.

Furthermore, terms such as "first," "second," and the like are used for descriptive purposes only and should not be construed as indicating or implying relative importance or the number of the referenced technical features. Features designated with "first," "second," and the like may expressly or implicitly include one or more such features. Technical solutions from different embodiments may be combined, provided that such combinations are implementable by those skilled in the art. Combinations that result in contradictions or are technically infeasible shall be deemed nonexistent and excluded from the scope of protection of the present disclosure.

The foregoing description merely illustrates preferred embodiments of the present disclosure and is not intended to limit the scope of the present disclosure. Any equivalent structural changes made based on the contents of the specification and drawings, or direct or indirect applications in other related technical fields, shall fall within the scope of protection of the present disclosure.

## Claims

1. A battery housing (100), **characterized in that** comprises:
a main body (10) defining a battery compartment (101) configured to accommodate battery units (300) of a battery pack;
a cover (20) connected to the main body (10) and sealing the battery compartment (101); and
a shell cover assembly (30) connected to a side of the cover (20) opposite the battery compartment (101), the shell cover assembly (30) defining an electrical compartment (301) configured to accommodate electrical units (200) of the battery pack,
wherein the cover (20) includes an opening (201) in a region corresponding to the electrical compartment (301), and the opening (201) communicates the battery compartment (101) and the electrical compartment (301).

2. The battery housing (100) according to claim 1, wherein the cover (20) protrudes toward the electrical compartment (301) to form a raised platform (21) configured to support the electrical units (200), and the raised platform (21) comprises a plurality of parallel, spaced-apart elongated grooves or a plurality of spaced-apart spherical recesses.

3. The battery housing (100) according to claim 2, further comprising a plurality of load-bearing beams (40) disposed on the raised platform (21) and connected to the shell cover assembly (30).

4. The battery housing (100) according to any one claims 1-3, wherein the shell cover assembly (30) comprises a frame (31) and a top cover (32), the frame (31) is connected to the cover (20), an assembly port (312) is defined at an end of the frame (31) opposite the cover (20), and the top cover (32) is connected to the frame (31) and seals the assembly port (312).

5. The battery housing (100) according to claim 4, wherein the shell cover assembly (30) further comprises a panel (33) and a connector (34), the panel (33) includes a socket (332), the connector (34) is assembled in the socket (332), the top cover (32) includes a window (321) communicating with the electrical compartment (301), and the panel (33) is connected to the top cover (32) and seals the window (321).

6. The battery housing (100) according to claim 4, wherein the shell cover assembly (30) further comprises a first sealing ring (35), the frame (31) and the cover (20) are connected by a welded seal, and the top cover (32) and the frame (31) are sealingly connected by the first sealing ring (35).

7. The battery housing (100) according to claim 5, wherein the shell cover assembly (30) further comprises a second sealing ring (36) and a third sealing ring (37), the panel (33) and the top cover (32) are sealingly connected by the second sealing ring (36), and the cover (20) and the main body (10) are sealingly connected by the third sealing ring (37).

8. The battery housing (100) according to any one of claims 1-7, further comprising a plurality of reinforcing beams (50) connected to the main body (10), the reinforcing beams (50) spaced apart and arranged in parallel along a length direction of the main body (10), with adjacent reinforcing beams (50) configured to accommodate battery units (300) therebetween.

9. A battery pack, **characterized in that** comprises:
battery units (300);
electrical units (200); and
a battery housing (100),
wherein the battery units (300) are assembled in a battery compartment (101) of the battery housing (100), the electrical units (200) are assembled in an electrical compartment (301) of the battery housing (100), and the battery units (300) and the electrical units (200) are electrically connected through the opening (201); the battery housing (100) comprises:
a main body (10) defining the battery compartment (101) configured to accommodate battery units (300) of a battery pack;
a cover (20) connected to the main body (10) and sealing the battery compartment (101); and
a shell cover assembly (30) connected to a side of the cover (20) opposite the battery compartment (101), the shell cover assembly (30) defining the electrical compartment (301) configured to accommodate electrical units (200) of the battery pack,
wherein the cover (20) includes an opening (201) in a region corresponding to the electrical compartment (301), and the opening (201) communicates the battery compartment (101) and the electrical compartment (301).

10. The battery pack according to claim 9, wherein the cover (20) protrudes toward the electrical compartment (301) to form a raised platform (21) configured to support the electrical units (200), and the raised platform (21) comprises a plurality of parallel, spaced-apart elongated grooves or a plurality of spaced-apart spherical recesses.

11. The battery pack according to claim 10, further comprising a plurality of load-bearing beams (40) disposed on the raised platform (21) and connected to the shell cover assembly (30).

12. The battery pack according to any one of claims 9-11, wherein the shell cover assembly (30) comprises a frame (31) and a top cover (32), the frame (31) is connected to the cover (20), an assembly port (312) is defined at an end of the frame (31) opposite the cover (20), and the top cover (32) is connected to the frame (31) and seals the assembly port (312).

13. The battery pack according to claim 12, wherein the shell cover assembly (30) further comprises a panel (33) and a connector (34), the panel (33) includes a socket (332), the connector (34) is assembled in the socket (332), the top cover (32) includes a window (321) communicating with the electrical compartment (301), and the panel (33) is connected to the top cover (32) and seals the window (321).

14. The battery pack according to claim 13, wherein the shell cover assembly (30) further comprises a first sealing ring (35), a second sealing ring (36), and a third sealing ring (37), the frame (31) and the cover (20) are connected by a welded seal, and the top cover (32) and the frame (31) are sealingly connected by the first sealing ring (35), wherein the panel (33) and the top cover (32) are sealingly connected by the second sealing ring (36), and the cover (20) and the main body (10) are sealingly connected by the third sealing ring (37).

15. The battery pack according to any one of claims 9-14, further comprising a plurality of reinforcing beams (50) connected to the main body (10), the reinforcing beams (50) spaced apart and arranged in parallel along a length direction of the main body (10), with adjacent reinforcing beams (50) configured to accommodate battery units (300) therebetween.
